(19) Europäisches Patentamt

European Patent Office

Office européen des brevets

(11) **EP 3 825 651 A1**

(12) **EUROPEAN PATENT APPLICATION**

(43) Date of publication:
**26.05.2021 Bulletin 2021/21**

(21) Application number: **20194982.3**

(22) Date of filing: **30.11.2017**

(51) Int Cl.:
**G01C 21/20** *(2006.01)*  **B63B 49/00** *(2006.01)*
**G01W 1/10** *(2006.01)*  **G01W 1/00** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2016 EP 16201572**

(62) Document number(s) of the earlier application(s) in accordance with Art. 76 EPC:
**17204814.2 / 3 330 171**

(71) Applicant: **Offshore Navigation Limited**
**2640 George Hill (AI)**

(72) Inventors:
• **DOKKEN, Sverre**
  **3071 Limassol (CY)**

• **MAO, Wengang**
  **412 96 Gothenburg (SE)**
• **ANAGNOSTOPOULOS, Alexis**
  **London, W1W 7LT (GB)**

(74) Representative: **Patentship**
**Patentanwaltsgesellschaft mbH**
**Elsenheimerstraße 65**
**80687 München (DE)**

Remarks:
This application was filed on 08-09-2020 as a divisional application to the application mentioned under INID code 62.

(54) **APPARATUS FOR PREDICTING A POWER CONSUMPTION OF A MARITIME VESSEL**

(57)  The invention relates to an apparatus 100 for predicting a power consumption of a maritime vessel. The apparatus 100 comprises an input interface 101 configured to receive a speed of the maritime vessel and a physical parameter of a maritime environment of the maritime vessel, the speed and the physical parameter influencing the power consumption of the maritime vessel. The apparatus 100 comprises a processor 102 configured to determine a power consumption estimate based on the speed and the physical parameter using a predetermined power consumption model, to determine a power consumption correction based on the speed and the physical parameter using a power consumption correction model, the power consumption correction model representing a modeling error associated with the predetermined power consumption model, the power consumption correction model depending on a model parameter associated with the physical parameter, and to combine the power consumption estimate with the power consumption correction in order to obtain a predicted power consumption of the maritime vessel. The apparatus 100 further comprises an output interface 103 configured to provide the predicted power consumption of the maritime vessel. The apparatus may further comprise a memory 104.

Fig. 1

**Description**

The invention relates to an apparatus for predicting a power consumption of a maritime vessel, an apparatus for determining a model parameter of a power consumption correction model of a maritime vessel, a method for operating an apparatus for predicting a power consumption of a maritime vessel, a method for operating an apparatus for determining a model parameter of a power consumption correction model of a maritime vessel, and a computer program for performing the methods.

In maritime environments, route and performance optimization of a maritime vessel may be performed in order to increase the efficiency and reliability of shipping and reduce emissions. For this purpose, the prediction of a power consumption of the maritime vessel at a given speed is of particular interest. Usually, theoretical models are used to predict the power consumption of a maritime vessel. However, these theoretical models may have large uncertainties and prediction errors. An accurate prediction of the power consumption is, however, desirable for providing high-quality ship-related services, e.g. accurate sail planning or weather routing systems. This may also be desirable for fuel and/or emission and/or fatigue and/or time optimization.

It is therefore an object of the invention to provide an improved concept for predicting a power consumption of a maritime vessel.

This object is achieved by the features of the independent claims. Further embodiments are described in the dependent claims, in the description as well as in the figures.

The invention is based on the finding that a predetermined power consumption model, e.g. a theoretical model, and a power consumption correction model representing a modeling error associated with the predetermined power consumption model, can be evaluated in parallel in order to improve the prediction of the power consumption of the maritime vessel. The power consumption correction model can be based on a machine-learning approach, e.g. a statistical regression, a neural network, an extreme gradient boosted tree, a Kalman filter, or the like, and may be trained in order to minimize an error of overall power consumption prediction. The training may be performed upon the basis of training sets stored in a database, which may continuously be updated; thus providing an updated model parameter of the power consumption correction model. The maritime vessel may e.g. be a ship or an off-shore platform. Based on the predicted power consumption, a fuel consumption may be predicted.

According to a first aspect of the invention, the object is solved by an apparatus for predicting a power consumption of a maritime vessel. The apparatus comprises an input interface configured to receive a speed of the maritime vessel and a physical parameter of a maritime environment of the maritime vessel. The speed and the physical parameter influence the power consumption of the maritime vessel. The apparatus comprises a processor configured to determine a power consumption estimate based on the speed and the physical parameter using a predetermined power consumption model. The processor is configured to determine a power consumption correction based on the speed and the physical parameter using a power consumption correction model, the power consumption corrected model representing a modeling error associated with the predetermined power consumption model, the power consumption correction model depending on a model parameter associated with the physical parameter. The processor is further configured to combine the power consumption estimate with the power consumption correction in order to obtain a predicted power consumption of the maritime vessel. The apparatus comprises an output interface that is configured to provide the predicted power consumption of the maritime vessel.

The apparatus may be allocated on board of the maritime vessel or may be allocated on shore and may be in communication with a computer system on board of the maritime vessel. The input interface and/or the output interface may be configured to transmit and/or receive radio signals or signals by cable. The processor may be a CPU and/or a GPU of a computer system, a microcontroller unit, or the like. The combination of the power consumption estimate with the power consumption correction may e.g. be performed by adding the power consumption estimate and the power consumption correction, or by subtracting the power consumption correction from the power consumption estimate.

The predetermined power consumption model may be a predetermined theoretical model. The power consumption correction model may be based on a machine learning approach, e.g. using supervised learning or un-supervised learning. The power consumption correction model may be updated during operation of the apparatus.

In an embodiment, the predetermined power consumption model comprises a calm water resistance model of the maritime vessel and an added resistance model of the maritime vessel.

The calm water resistance model can reflect the resistance of the maritime vessel in calm water, i.e. without the effects of waves and winds and other geophysical parameters affecting the resistance. The calm water resistance model can e.g. be based on the Holtrop-Mennen method or the like. The added resistance model can reflect the resistance of the maritime vessel due to waves and winds and other geophysical parameters affecting the resistance. The added resistance model can e.g. be based on potential flow panel methods or the like. The added resistance model can further reflect changes of the resistance over time, e.g. due to a varying friction.

In an embodiment, the calm water resistance model is independent of the physical parameter and the added resistance model is dependent of the physical parameter.

In an embodiment, the power consumption correction model is a statistical regression model, wherein the model parameter is a weight associated with the physical parameter; or wherein the power consumption correction model is a neural network model, wherein the model parameter is a weight of a neuron associated with the physical parameter; or wherein the power consumption correction model is an extreme gradient boosted tree model, wherein the model parameter is a score of a leaf associated with the physical parameter; or wherein the power consumption correction model is a Kalman filter model, wherein the model parameter is a coefficient associated with the physical parameter. Similar models may also be applied.

In an embodiment, the physical parameter is one of the following physical parameters: a rudder angle of the maritime vessel, a draft of the maritime vessel, a heading of the maritime vessel, a wind speed relative to the maritime vessel, a wind direction relative to the maritime vessel, a current speed relative to the maritime vessel, a current direction relative to the maritime vessel, a wave height around the maritime vessel, a wave period around the maritime vessel, a wave steepness around the maritime vessel, a wave spectrum around the maritime vessel, a water density around the maritime vessel, a water salinity around the maritime vessel, a water temperature around the maritime vessel, a wetted surface of the maritime vessel, a geometric parameter of a hull of the maritime vessel, a sea ice thickness around the maritime vessel, a sea ice concentration around the maritime vessel, a fouling intensity of a hull of the maritime vessel. Similar physical parameters may also be applied.

These physical parameters, for example, influence the power consumption of the maritime vessel. The maritime vessel and/or the apparatus may comprise a respective sensor for detecting any one of the physical parameters.

In an embodiment, the input interface is configured to receive a category indicator indicating a category of the maritime vessel, wherein the processor is configured to select the predetermined power consumption model from a plurality of predetermined power consumption models upon the basis of the category indicator.

Each predetermined power consumption model of the plurality of predetermined power consumption models can be associated with a respective category of a maritime vessel. The respective category can be indicative of a shape of a respective maritime vessel. In particular, different categories, e.g. a category for small-sized maritime vessels, a category for medium-sized maritime vessels, and a category for large-sized maritime vessels, may be used. As an example, large container ships and large cruise-liner ships may be regarded as large-sized maritime vessels. The number of different categories may be large and may be increased to an arbitrary, e.g. unlimited, number.

According to a second aspect of the invention, the object is solved by an apparatus for determining a model parameter of a power consumption correction model of a maritime vessel. The power consumption correction model represents a modeling error associated with a predetermined power consumption model. The apparatus comprises a database comprising a plurality of training sets, each training set comprising a speed of the maritime vessel, the physical parameter of a maritime environment of the maritime vessel and a power consumption of the maritime vessel. The apparatus further comprises a processor that is configured to determine, for each training set, a power consumption estimate based on the respective speed and the respective physical parameter using the predetermined power consumption model. The processor is further configured to determine, for each training set, a respective power consumption difference between the respective power consumption estimate and the respective power consumption. The processor is configured to append, for each training set, the respective power consumption difference to the respective training set in order to obtain a respective appended training set and to train the power consumption correction model upon the basis of the plurality of appended training sets in order to obtain the model parameter of the power consumption correction model. The apparatus comprises further an output interface configured to provide the model parameter.

The apparatus provides a model parameter to be used in the power consumption correction model for predicting the power consumption of the maritime vessel. The determination of the model parameter is based on a machine-learning approach.

The power consumption comprised by the respective training set represents an actual power consumption of the maritime vessel, which has previously been recorded and serves as a ground-truth value for the training of the power consumption correction model. The apparatus is thus configured to train the power consumption correction model by supervised learning using the plurality of appended training sets. The apparatus may also be configured to train the power consumption correction model by unsupervised learning using the plurality of appended training sets.

The database can further comprise a plurality of test sets, each test set comprising a speed of the maritime vessel, a physical parameter of a maritime environment of the maritime vessel, and a power consumption of the maritime vessel, wherein the processor is configured to test the power consumption correction model upon the basis of the plurality of test sets.

In an embodiment, the apparatus further comprises an input interface configured to receive a training set, wherein the training set comprises a speed of the maritime vessel, a physical parameter of the maritime environment of the maritime vessel and a power consumption of the maritime vessel. The input interface is configured to store the received training set on the database. The training sets may comprise a plurality of physical parameters.

With the input interface, new training sets can be added to the database. This allows for an automatic and/or manual updating of the training sets in the database.

In an embodiment, the input interface is configured to receive a category indicator indicating a category of the maritime vessel, wherein the processor is configured to select the predetermined power consumption model from a plurality of predetermined power consumption models upon the basis of the category indicator.

In an embodiment, the predetermined power consumption model comprises a calm water resistance model of the maritime vessel and an added resistance model of the maritime vessel.

In an embodiment, the calm water resistance model is independent of the physical parameters within the plurality of training sets and the added resistance model is dependent of the physical parameters within the plurality of training sets.

In an embodiment, the power consumption correction model is a statistical regression model, wherein the model parameter is a weight associated with a physical parameter; or wherein the power consumption correction model is a neural network model, wherein the model parameter is a weight of a neuron associated with the physical parameter; or wherein the power consumption correction model is an extreme gradient boosted tree model, wherein the model parameter is a score of a leaf associated with the physical parameters; or wherein the power consumption correction model is a Kalman filter model, wherein the model parameter is a coefficient associated with the physical parameter. Similar models may also be applied.

In an embodiment, the physical parameter is one of the following physical parameters: a rudder angle of the maritime vessel, a draft of the maritime vessel, a heading of the maritime vessel, a wind speed relative to the maritime vessel, a wind direction relative to the maritime vessel, a current speed relative to the maritime vessel, a current direction relative to the maritime vessel, a wave height around the maritime vessel, a wave period around the maritime vessel, a wave steepness around the maritime vessel, a wave spectrum around the maritime vessel, a water density around the maritime vessel, a water salinity around the maritime vessel, a water temperature around the maritime vessel, a wetted surface of the maritime vessel, a geometric parameter of a hull of the maritime vessel, a sea ice thickness around the maritime vessel, a sea ice concentration around the maritime vessel, a fouling intensity of a hull of the maritime vessel. Similar physical parameters may also be applied.

According to a third aspect of the invention, the object is solved by the use of one of the apparatuses within a sail plan system for planning a sailing route of a maritime vessel. The sail plan system may comprise one or both apparatuses. In particular, the functionality of the respective components of the apparatuses may be implemented within the sail plan system, e.g. using software components. The sail plan system may perform an optimization.

The apparatuses may analogously be used within a weather routing system for routing within the maritime environment. The weather routing system may comprise one or both apparatuses. In particular, the functionality of the respective components of the apparatuses may be implemented within the weather routing system, e.g. using software components. The weather routing system may perform an optimization.

According to a fourth aspect of the invention, the object is solved by a method for operating an apparatus for predicting a power consumption of a maritime vessel, the apparatus comprising an input interface, a processor and an output interface. The method comprises: receiving, by the input interface, a speed of the maritime vessel and a physical parameter of a maritime environment of the maritime vessel, the speed and the physical parameter influencing the power consumption of the maritime vessel, determining, by the processor, a power consumption estimate based on the speed and the physical parameter using a predetermined power consumption model, determining, by the processor, a power consumption correction based on the speed and the physical parameter using a power consumption correction model, the power consumption correction model representing a modeling error associated with the predetermined power consumption model, the power consumption correction model depending on a model parameter associated with the physical parameter, combining, by the processor, the power consumption estimate with the power consumption correction in order to obtain a predicted power consumption of the maritime vessel, and providing, by the output interface, the predicted power consumption of the maritime vessel.

The method may be performed by the apparatus for predicting the power consumption of the maritime vessel. Further features of the method directly result from the functionality of the apparatus for predicting the power consumption of the maritime vessel.

According to a fifth aspect of the invention, the object is solved by a method for operating an apparatus for determining a model parameter of a power consumption correction model of a maritime vessel, the power consumption correction model representing a modeling error associated with a predetermined power consumption model. The apparatus comprises a database, a processor and an output interface, wherein the database comprises a plurality of training sets, each training set comprising a speed of the maritime vessel, a physical parameter of a maritime environment of the maritime vessel and a power consumption of the maritime vessel. The method comprises: determining, by the processor, for each training set, a power consumption estimate based on the respective speed and the respective physical parameter using the predetermined power consumption model, determining, by the processor, for each training set, a respective power consumption difference between the respective power consumption estimate and the respective power consumption, appending, by the processor, for each training set, the respective power consumption difference to the respective training set in order to obtain a respective appended training set, training, by the processor, the power consumption correction model upon the basis of the plurality of appended training sets in order to obtain the model parameter of the power consumption correction model, and providing, by the output interface, the model parameter.

The method may be performed by the apparatus for determining the model parameter of the power consumption correction model. Further features of the method directly result from the functionality of the apparatus for determining the model parameter of the power consumption correction model.

According to a sixth aspect of the invention, the object is solved by a computer program comprising a program code for performing one of the methods.

The invention can be implemented in hardware and software.

The inventive concept is now described, by way of example, with reference to the accompanying drawings, in which:

Fig. 1    shows a schematic diagram of an arrangement with an apparatus according to an embodiment of the invention;

Fig. 2    shows a schematic diagram of another apparatus according to an embodiment of the invention;

Fig. 3    shows a schematic diagram of an arrangement with a ship and an apparatus according to an embodiment of the invention;

Fig. 4    shows a schematic flow diagram for a method according to an embodiment of the invention; and

Fig. 5    shows another schematic flow diagram of a method according to another embodiment of the invention.

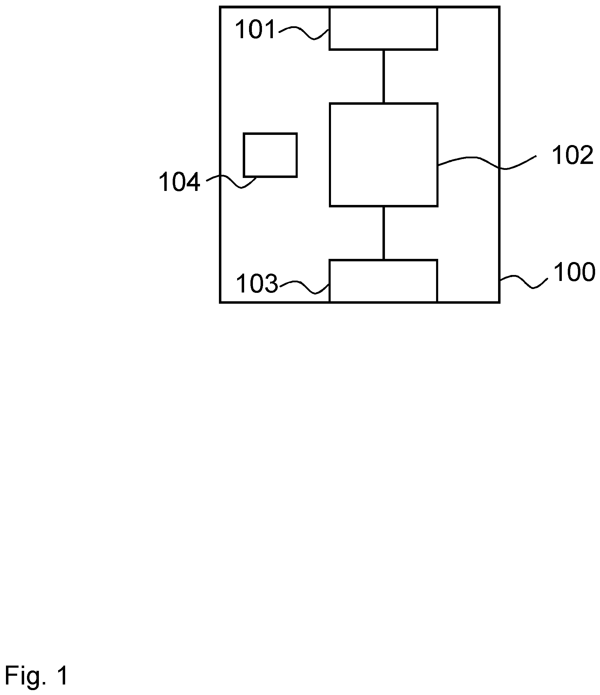

Fig. 1 shows an arrangement with an apparatus 100 for predicting a power consumption of a maritime vessel. The apparatus 100 comprises an input interface 101, a processor 102, and output interface 103, and a memory 104.

The input interface 101 is configured to receive a measured physical parameter. The interface 101 is further configured to receive a measured speed of the maritime vessel. The processor 102 is a CPU or GPU of a computer system. In other embodiments, the processor 102 is a microcontroller unit. The output interface 103 is configured to provide the predicted power consumption of the maritime vessel e.g. to a computer system.

The memory 104 may e.g. be realized as a solid-state disk, a hard-disk drive or a cloud storage or processing system. The memory 104 is in functional communication with the input interface 101, the processor 102 and the output interface 103.

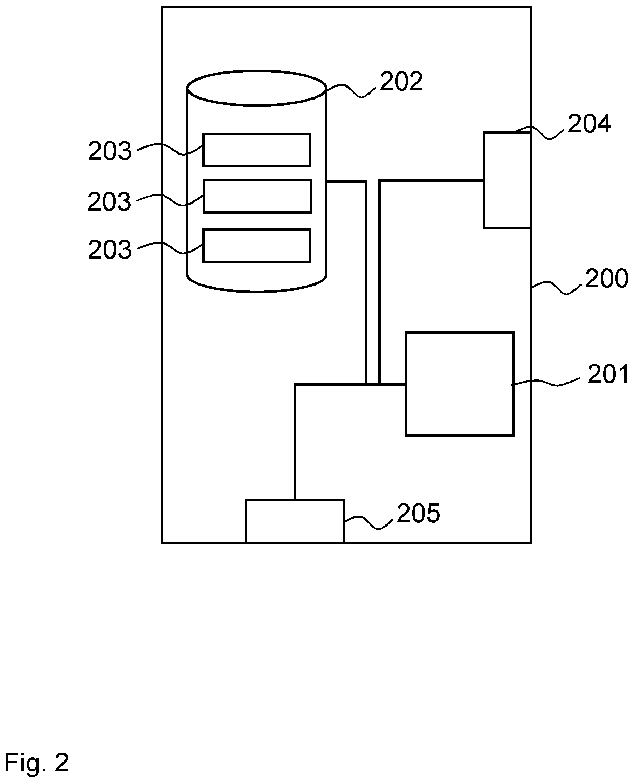

Fig. 2 shows an embodiment of another apparatus 200. The apparatus 200 comprises a processor 201, a database 202 comprising a plurality of training sets 203, an input interface 204, and an output interface 205.

The processor 201 is a CPU of a computer system. The input interface 204 is in functional communication with the database 202 and the processor 201. The input interface 204 is configured to receive a training set 203, and store the received training set 203 in the database 202. The output interface 205 may be connected to a display or a computer system and is configured to provide a model parameter.

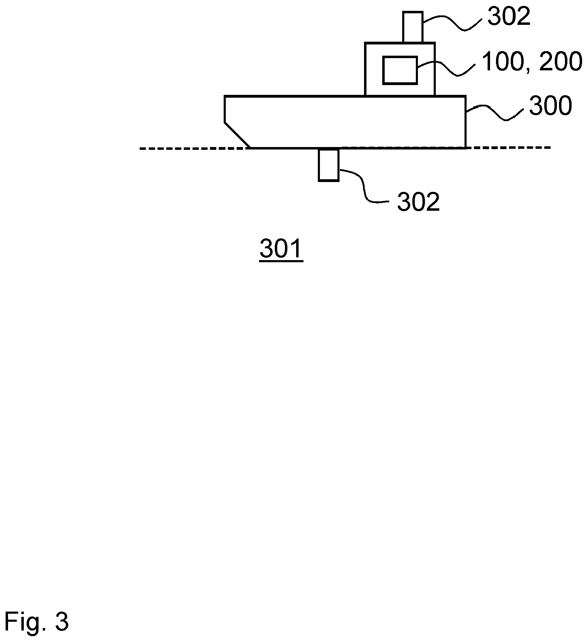

Fig. 3 shows an arrangement with a maritime vessel 300, in particular a ship. The maritime vessel 300 is moving within a maritime environment, e.g. on an ocean 301. The maritime vessel 300 comprises sensors 302. The sensors 302 are sensors to measure physical parameters of an environment of the maritime vessel 300. In particular, the sensors 302 are configured to measure or receive, e.g. from an external device such as an AIS (Automatic Identification System), at least one of the following physical parameters: a rudder angle of the maritime vessel 300, a draft of the maritime vessel 300, a heading of the maritime vessel 300, a wind speed relative to the maritime vessel 300, a wind direction relative to the maritime vessel 300, a current speed relative to the maritime vessel 300, a current direction relative to the maritime vessel 300, a wave height around the maritime vessel 300, a wave period around the maritime vessel 300, a wave steepness around the maritime vessel 300, a wave spectrum around the maritime vessel 300, a water density around the maritime vessel 300, a water salinity around the maritime vessel 300, a water temperature around the maritime vessel 300, a wetted surface of the maritime vessel 300, a sea ice thickness around the maritime vessel 300, a sea ice concentration around the maritime vessel 300, a fouling intensity of a hull of the maritime vessel 300. The sensors 302 may further measure a speed of the maritime vessel 300, in particular a speed over water of the maritime vessel 300. The sensors 302 may further measure an (actual) power consumption of the maritime vessel 300 to be used for training purposes, e.g. within training sets. A geometric parameter of a hull of the maritime vessel 300 as a physical parameter may be predetermined or may be provided to the apparatus 100 or the apparatus 200.

The maritime vessel 300 may further comprise the apparatus 100. The apparatus 100 is in functional communication with the sensors 302 and/or external devices to receive identical or similar parameters. The input interface 101 of the apparatus 100 is configured to receive the physical parameters and/or the speed of the maritime vessel measured from the sensors 302. These parameters may also be received from an external device, e.g. an AIS system.

The maritime vessel 300 may further comprise the apparatus 200. The apparatus 200 is in functional communication with the sensors 302. The input interface 204 is configured to receive training sets comprising a speed of the maritime vessel 300, a physical parameter of a maritime environment of the maritime vessel 300, and an (actual) power consumption of the maritime vessel 300, and to store the received training set in the database 202.

In another embodiment, the apparatus 100 and/or the apparatus 200 are arranged on-shore, and communicate with the respective sensors 302 of the maritime vessel 300 over a communication network, e.g. the Internet or a dedicated communication network.

Consequently, predicting a power consumption and determining a model parameter of a power consumption correction model can be realized. The model parameter can thus be updated and can be used for predicting the power consumption of the maritime vessel 300.

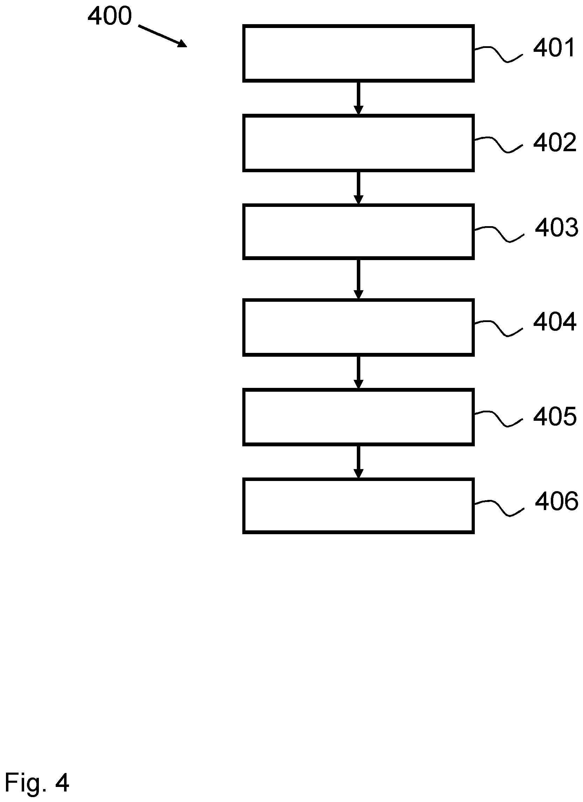

Fig. 4 shows a schematic flow diagram 400 for a method according to an embodiment of the invention. The described method may be performed by the apparatus 100 on board of the maritime vessel 300.

In step 401 the speed of the maritime vessel 300 is received by the input interface 101. The speed of the maritime vessel 300 is measured by the sensors 302 of the maritime vessel 300 or received from an external device. The sensors 302 send the measured speed of the maritime vessel directly towards the input interface 101. In another embodiment, the sensors 302 store the measured speed of the maritime vessel 300 in the memory 104 or another memory. The input interface 101 of the apparatus 100 can receive the speed value of the maritime vessel 300 by reading the stored value from the memory 104.

In step 402, the input interface 101 receives the physical parameter of the maritime environment of the maritime vessel 300. The physical parameter is measured by the sensors 302 of the maritime vessel 300 received from an external device, and is sent directly to the input interface 101 in the above-described way. In another embodiment, also as described above, the sensors 302 store the physical parameter in the memory 104 after the measurement or reception.

In step 403, the processor 102 determines a power consumption estimate. The power consumption estimate is based on the received speed of the maritime vessel 300 and the physical parameter of the maritime environment of the maritime vessel 300. For determining the power consumption estimate, the processor 102 uses a predetermined power consumption model. The predetermined power consumption model may be predefined. The predetermined power consumption model may also be updated according to a supervised or unsupervised machine-learning approach.

In step 404, the processor determines a power consumption correction. The power consumption correction is also based on the speed and the physical parameter. The processor uses for determining the power consumption correction a power consumption correction model. The power consumption correction model represents a modeling error of the predetermined power consumption model.

In step 405, the processor combines the determined power consumption estimate and the power consumption correction. In the described embodiment, the processor adds the power consumption estimate and the power consumption correction. The processor may alternatively subtract the power consumption correction from the power consumption estimate. In other embodiments other mathematical methods are used to combine the determined power consumption estimate and the power consumption correction.

In step 406, the output interface provides the predicted power consumption of the maritime vessel 300, e.g. to the memory 104. In another embodiment, the predicted power consumption is output additionally or alternatively to a display or another computer system.

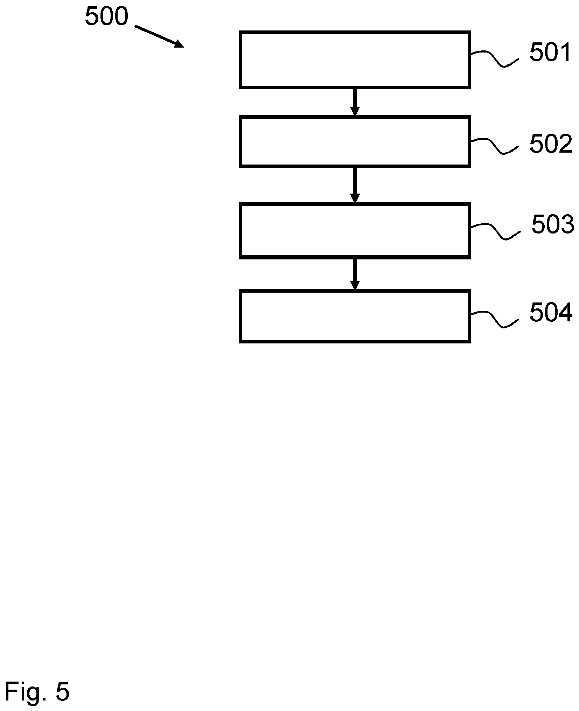

Fig. 5 shows a schematic flow diagram 500 of a method according to another embodiment of the invention. In this embodiment, the method is performed by the apparatus 200. The apparatus 200 may be allocated on board of a vessel, in particular in the maritime vessel 300, or on shore.

The database 202 comprises a plurality of training sets 203. Each training set 203 comprises the speed of the maritime vessel 300 and a physical parameter of the maritime environment of the maritime vessel 300. For example, each training set 203 comprises a wind speed relative to the maritime vessel 200 as a physical parameter. In another embodiment the physical parameter may be a vector comprising several single physical parameters. In another embodiment, the training sets 203 comprise a plurality of physical parameters.

The processor 201 is configured to read the training sets 203. The processor 201 determines in step 501 a power consumption estimate based on the respective speed and the physical parameter. For determining the power consumption estimate, the process 201 uses a predetermined power consumption model. The predetermined power consumption model in this embodiment correlates to the predetermined power consumption model described according to the method described with reference to Fig. 4. Step 501 is repeated for each training set 203.

In step 502, the processor determines, for each training set 203, a difference between the determined power consumption estimate and the respective power consumption. The respective power consumption may have been measured during a previous voyage of the maritime vessel as a historical value and may serve as a reference to be compared with the determined power consumption estimate.

In step 503, the processor appends to each training set 203 the respective power consumption difference from the step 502. Therefore, the processor generates a respective appended training set.

In step 504, the processor trains the power consumption correction model on the basis of the plurality of appended training sets. For this purpose, a machine-learning approach, e.g. based on a statistical regression, a neural network, an extreme gradient boosted tree, or a Kalman filter, may be used.

In the following, further exemplary embodiments of the apparatus 100 and/or the apparatus 200 are described. In particular, suitable predetermined power consumption models are described in more detail.

Power prediction can be performed with empirical and semi-empirical methods according to the ITTC (International Towing Tank Conference) procedure aimed at meeting the IMO (International Maritime Organization) EEDI (Energy Efficiency Design Index) requirements. The total resistance here can be calculated as the sum of three terms: calm water resistance, wind added resistance and wave added resistance. Smaller terms that contribute to the resistance such as drifting, steering for course keeping, shallow water may not be considered as it is considered that their contribution may be very small and may be neglected. Once the total resistance is calculated, the required power is found and plotted to compare it to the actual propulsion taken from the data.

Resistance & Power prediction:

The resistance of a ship at a given speed is the force needed to tow the ship at that speed through water. The total required resistance is the sum of more components, caused by different factors. Here the total resistance is broken down into three components:

- Calm water resistance
- Wind added resistance
- Wave added resistance

The methods used to compute these resistances are described in the following.

Resistance & Power prediction for calm water:

The calm water resistance is usually considered to be the sum of four components:

- Frictional resistance, caused by the motion of the hull through a viscous fluid.
- Wave making resistance, caused by the energy that the hull transfers to the wave system created on the surface of the water.
- Eddy resistance, caused by the energy taken away by eddies shed from the hull and appendages.
- Air resistance by the above-water part of the main hull and the superstructures due to the motion of the ship through the air.

The wave making resistance and the eddy resistance may often be considered together as residual resistance. As an example, the resistance and the required power for calm water are calculated following a specific method. The method can e.g. be based on the recommended procedures of ITTC '57, and the required power is found by regression analysis of model test results from different combinations of speed, draught and trim calibrated by full scale speed trials at delivery.

The total required power in calm water is calculated as shown in eq. 2.1:

$$P_{CW} = P_F + P_R \qquad (2.1)$$

where:

- $P_F$ is the power required for the frictional resistance
- $P_R$ is the power required for the residual resistance

Frictional Resistance & Power:

The frictional resistance $R_F$ is the sum of the tangential stresses along the wetted surface in the direction of the motion. According to the ITTC '57 formula it is calculated as:

$$R_F = 1/2 \cdot \rho \cdot S \cdot V^2 \cdot C_F \qquad (2.2)$$

where:

$\rho$ = 1025 $kg/m^3$ is the sea water density
$S$ = wetted surface of the hull
$V$ = speed of the ship

and the frictional coefficient $C_F$ is defined, according to ITTC '57 as:

$$C_F = \frac{0.075}{log_{10}Re(V) - 2)^2} + \left( 44 \left( \left( \frac{k_s}{L_{PP}} \right)^{1/3} - 10Re^{-1/3} \right) + 0.125 \right) \times 10^{-3} \quad (2.3)$$

where:

$$Re(V) = \frac{V \cdot L_{PP}}{1.187 \cdot 10^{-6}} \text{ is the Reynolds number}$$

$$k_s = 150 \; \mu m \text{ is the hull surface roughness}$$

The first part of eq. 2.3 accounts for the frictional coefficient, while the second part is an increment coefficient, also known as $C_A$ which accounts for the roughness of the hull computed according to Townsin's equation as reported by Watson.

Once, the resistance is known, the required power can be computed as shown in eq. 2.4:

$$P_F = R_F \; V \; \frac{C_P}{\eta_{tot}} \qquad (2.4)$$

where V is the speed, $C_P$ is the correction factor for delivered power and $\eta_{tot}$ the total efficiency. The value of $C_P$ is 1.058 and the total efficiency is equal to 0.732. Both values were provided. The results are shown in Fig. 2.1.

Residual Power:

The residual power is founded on regression analysis of model test results from different combinations of speed, draught and trim calibrated by full scale speed trials at delivery. Fig. 2.1 shows the power prediction for calm water. The curves of $P_D$ and $P_R$ have been calculated through the regression analysis, while $P_F$ is calculated as shown in Eq. 2.1.

Figure 2.1: Plot showing the total required power for calm water and the single components.

In Table 2.1 a range of speeds is displayed to show the values of the power related to the more common operational conditions of a ship. The Froude number is calculated as:

$$Fn = \frac{V}{\sqrt{g\ L_{pp}}} \qquad\qquad (2.5)$$

where:

V: speed of the ship in m/s
g: gravitational constant
$L_{pp}$: Length between perpendiculars

Table 2.1: Required power for calm water.

| Speed | $F_N$ | $P_{CW}$ |
|-------|-------|----------|
| [kn] | [-] | [MW] |
| 16.0 | 0.177 | 7.323 |
| 17.0 | 0.189 | 8.457 |
| 18.0 | 0.200 | 9.829 |
| 19.0 | 0.211 | 11.523 |
| 20.0 | 0.222 | 13.631 |
| 21.0 | 0.233 | 16.241 |

Resistance increase due to the effect of the wind:

A ship, sailing, experiences a resistance when moving through the air depending on the ship's speed and the area and the shape of the superstructures. When wind is blowing the resistance also depends on the speed of the wind and its relative direction. In addition, the wind raises waves which are cause for further increase in resistance. The effects of waves are discussed later. Here, some terms regarding the air and wind resistance are explained to clarify their usage. The term "true" wind is intended to be the wind that exists independently from the ship's motion, and therefore, true wind equal to zero is still air. The "relative" wind is the vectorial summation of the speed and the direction of the ship with the speed and direction of the true wind.

In case that wind resistance tests have been performed in a wind tunnel, the wind resistance coefficients derived by these tests shall be used to calculate the wind resistance of the ship. In this case the wind resistance coefficients are based on the data derived from the performed model tests from the wind tunnel. The resistance increase due to relative wind is calculated according to ITTC by:

$$R_{AA} = \frac{1}{2}\rho_A V_{WR}^2 C_X(\psi_{WR}) A_{XV} \qquad\qquad (2.6)$$

where:

$A_{XV}$: Area of maximum transverse section exposed to the wind
$C_X$: wind resistance coefficient
$V_{WR}$: relative wind speed
$\rho_A$: mass density of air
$\psi_{WR}$ relative wind direction, with heading wind at 0°

As previously done for the calm water, the power required is calculated by multiplying the resistance $R_{AA}$ by the relative speed $V_{WR}$ and the efficiencies as shown in eq. 2.7.

$$P_{AA} = R_{AA} \, V_{WR} \, \frac{1}{\eta_{tot}} \qquad (2.7)$$

The resulting required power for the wind for different wind directions is plotted in Fig. 2.2. For the plotting, a relative wind speed in the range from 0 to 22 knots is shown, and the three wind directions are 0°, 45° and 90°. For 0° it is considered head wind. From Fig. 2.2 it can be seen that the highest required power is for 0°, i.e. head wind, and it decreases as the angle becomes higher. The pattern of the curves is cubic, since the power has the term of the speed $V^3$. The wind resistance coefficients have been calculated from the wind tunnel tests.

Figure 2.2: Wind power prediction for relative wind speed from 0°, 45° and 90°.

Resistance increase due to the effect of waves:

The wave added resistance is defined as the mean force caused by the encountered waves. In this section two methods for the evaluation of the added resistance due to waves are presented. The reason why two different methods are chosen is to see how well they perform in the end in the prediction of the power. The first method is the "Improved Formula for estimating Added resistance of Ships in Engineering applications" by Liu et al. and the second is a simplified method developed by Alexandersson.

Improved Formula for Estimating Added Resistance of Ships in Engineering Applications:

The method presented here to calculate added resistance is a further refined formula based on the semi-empirical formula introduced by the authors of "Fast approach to the estimation of the added resistance of ships in waves" by Liu and Papanikolaou. The formula is based on best fitting of available experimental data for different hull forms and is made to be easy to be used for engineering applications as it uses only the speed, the main characteristics of the ship and the wave environment as input. This paper lies within the framework of the IMO Marine Environment Protection Committee (MEPC).232(65) EEDI guidelines for estimating the minimum powering of ships in adverse weather conditions. The formula is suitable for both low and moderate speeds and thus it can be used in a procedure for determining the minimum power required in adverse conditions [Liu et al.]. One of the limitations of this method is that it is to calculate the added resistance only for head waves.

Formula:

The predicted added resistance of a ship in head waves at any wave length is calculated as:

$$R_{AW} = R_{AWR} + R_{AWM} \qquad (2.8)$$

where $R_{AWR}$ is the added resistance in regular waves due to diffraction effect, caused from short waves, and $R_{AWM}$ is the added resistance in regular waves due to motion effect, caused by long waves.

Added resistance in regular waves due to diffraction:

$R_{AWR}$ is calculated as shown in eq. 2.9:

$$R_{AWR} = \frac{2.25}{2}\rho g B \zeta_a^2 sin^2 E \left(1 + 5\sqrt{\frac{L_{PP}}{\lambda}}Fn\right)\left(\frac{0.87}{C_B}\right)^{1+4\sqrt{Fn}} \qquad (2.9)$$

where:

$$E = arctan\left(\frac{B}{2L_E}\right)$$

Eq. 2.9 is a simplified expression using typical design data for a ship, based on the previous study of Liu et al. LE has been redefined as the distance from the forward perpendicular (F.P.) to the point where the ship breadth (beam) reaches 99%.

Figure 2.3: Wave resistance due to wave diffraction at 10 m/s.

Fig. 2.3 shows the pattern of the wave added resistance due to the diffraction of the waves at a speed of the ship of 10 m/s = 20 knots. It can be seen that the shorter the waves, where the ratio $\lambda/L_{PP}$ is lower in the left part of the plot, the higher the resistance. On the right part, where the $\lambda/L_{PP}$ ratio is higher the resistance decreases exponentially. This is because for longer waves the motions of the ship are the main component to the wave added resistance, which is presented in the next paragraph.

Added resistance in regular waves due to motions:

For long waves, the formula of Jinkine and Ferdinande can be modified to eq. 2.10:

$$R_{AWM} = 4\rho g \zeta_a^2 B^2 / L_{pp} \bar{\omega}^{b1} exp\left[\frac{b_1}{d_1}\left(1 - \bar{\omega}_1^d\right)\right]a_1 a_2 \qquad (2.10)$$

where $a_1$ and $a_2$ defined as shown in eq. 2.11 and 2.12 are the peak value factor and forward speed factor respectively.

$$a_1 = 60.3 C_B^{1.34} \left( \frac{0.87}{C_B} \right)^{1+Fn} \tag{2.11}$$

$$a_2 = \begin{cases} 0.0072 + 0.1676 Fn & \text{for } Fn < 0.12 \\ Fn^{1.5} exp(-3.5 Fn) & \text{for } Fn \geq 0.12 \end{cases} \tag{2.12}$$

The natural frequency $\bar{\bar{\omega}}$ is defined as in eq. 2.13

$$\bar{\omega} = \begin{cases} \dfrac{\sqrt{L_{pp}/g}\,\sqrt[3]{\frac{k_{yy}}{L_{pp}}}\,0.05^{0.143}}{1.17}\omega & \text{for } Fn < 0.05 \\ \dfrac{\sqrt{L_{pp}/g}\,\sqrt[3]{\frac{k_{yy}}{L_{pp}}}\,Fn^{0.143}}{1.17}\omega & \text{for } Fn \geq 0.05 \end{cases} \tag{2.13}$$

where $k_{yy}$ is the longitudinal mass radius of gyration.
The parameters $b_1$ and $d_1$ are defined as shown in eq. 2.14, 2.15, 2.16 and 2.17 for $C_B < 0.75$

$$b_1 = \begin{cases} 11.0 & \text{for } \bar{\omega} < 1 \\ -8.5 & \text{elsewhere} \end{cases} \tag{2.14}$$

$$d_1 = \begin{cases} 14.0 & \text{for } \bar{\omega} < 1 \\ -566 \left( \frac{L_{pp}}{B} \right)^{-2.66} \times 6 & \text{elsewhere} \end{cases} \tag{2.15}$$

for $C_B < 0.75$

$$b_1 = \begin{cases} 11.0 & \text{for } \bar{\omega} < 1 \\ -8.5 & \text{elsewhere} \end{cases} \tag{2.16}$$

$$d_1 = \begin{cases} 566 \left( \frac{L_{pp}}{B} \right)^{-2.66} & \text{for } \bar{\omega} < 1 \\ -566 \left( \frac{L_{pp}}{B} \right)^{-2.66} \times 6 & \text{elsewhere} \end{cases} \tag{2.17}$$

Figure 2.4: Wave resistance due to motions at 10 m/s.

By summing $R_{AWR}$ to $R_{AWM}$ the wave added resistance may be computed.

Figure 2.5: Wave added resistance at 10 m/s.

A simplified method to calculate added resistance based on Gerritsma and Beukelman's method:

Alexandersson proposed a simplified method to calculate the wave added resistance based on the method proposed by Gerritsma and Beukelman's. Gerritsma and Beukelman's method considers the radiated energy to calculate the added resistance by utilizing strip theory and is calculated with eq. 2.18:

$$R_{AW} = \frac{-k\cos\beta^2}{2\omega_e} \int_0^L b'|V_{Z_b}|x_b \qquad (2.18)$$

where, $k$ is the wave number, $\beta$ is heading angle, $\omega_e$ is encountered frequency, $L$ is the length of the waterline of the ship, $|V_{Z_b}|$ is the amplitude of the velocity of water relative to the strip, $b'$ is the sectional damping coefficient for speed and $x_b$ is the $x$ coordinate on the ship.

Gerritsma and Beukelman's method even though is one of the most widely used methods for calculating the

13

added resistance, as it is regarded an accurate method for different ship types, results quite complex when calculating the ship's motions by strip theory and might result difficult or unnecessary for certain applications.

To overcome the problem of not having the geometry of the hull and avoiding strip theory calculations Alexandersson proposed a simplified method by using Gerritsma and Beukelman's method. It was applied to a large series of case studies to determine the added resistance, then, by using linear regression, a series of simplified formulas were derived to determine the added resistance. This method is therefore considered semi-empirical. The limitations of this method are the following: the accuracy decreases in bow, beam, following waves, it only considers the added resistance from the ship motions and not considering the diffraction, and the trim of the ship is not included.

This method is briefly described below along with the equations that were used.

Method:

Alexandersson's method consists in fitting a normal distribution function to the transfer function to be described. This way, the transfer function can be described with eq. 2.19 by the use of only three parameters:

$$R_{AW,exp} = R_{AWp} \cdot e^{-\frac{(\omega - \omega_p)^2}{2c^2}} \tag{2.19}$$

where:

$R_{AW,p}$ is the peak value
$\omega_p$ is the peak frequency
c is the width.

The three parameters are calculated through linear regression and the equations derived by Alexandersson's method can be seen through eq. 2.20 to eq. 2.25:

$$R_{AW,p} = \beta_{const} + \beta_{C_p} \cdot C_P + \beta_{L_{CB,norm}} \cdot L_{CB,norm} + \beta \cdot \frac{1}{b_{norm}^2} + \beta_{T_{norm}} \cdot T_{norm} + \beta_{k_{yy}} \cdot \frac{1}{k_{yy}^2} + \beta_{Fn} \cdot Fn \tag{2.20}$$

$$\omega_{p,norm} = \omega_p \sqrt{\frac{L_{wl}}{2\pi g}} \tag{2.21}$$

$$\omega_{p,norm} = \beta_{const} + \beta_{C_p} \cdot C_P + \beta_{L_{CB,norm}} \cdot L_{CB,norm} + \beta \cdot b_{norm} + \beta_{T_{norm}} \cdot T_{norm} + \beta_{k_{yy}} \cdot \frac{1}{k_{yy}^2} + \beta_{Fn} \cdot \frac{1}{\sqrt{Fn}} \tag{2.22}$$

$$c_{norm} = c \sqrt{\frac{L_{wl}}{2\pi g}} \tag{2.23}$$

$$c_{norm} = \beta_{const} + \beta_{C_p} \cdot C_P + \beta_{L_{CB,norm}} \cdot L_{CB,norm} + \beta \cdot b_{norm} + \beta_{T_{norm}} \cdot T_{norm} + \beta_{k_{yy}} \cdot \frac{1}{k_{yy}^2} + \beta_{Fn} \cdot \frac{1}{Fn^2} \tag{2.24}$$

The parameters have been made non-dimensional through the relations shown in Table 2.2:

Table 2.2: Parameters of the model non-dimensionalized.

|  | Parameters | Non-dimensional parameters |
|---|---|---|
| Length of waterline | $L_{WL}$ | 1 |
| Prismatic coefficient | $C_P$ | $C_P$ |
| Longitudinal Center of buoyancy | $L_{CB}[m]$ | $L_{CB,norm} = L_{CB}/L_{WL}$ |
| Beam | $B$ [m] | $B_{norm} = B/L_{WL}$ |
| Draught | $T$ [m] | $T_{norm} = T/L_{WL}$ |
| Radius of pitch gyration | $r_{yy}$ [m] | $k_{yy} = r_{yy}/L_{WL}$ |
| Speed | $V$ [m/s] | $F_n$ |

Alexandersson has calculated all these parameters for 7 ships, and the ones most suitable for this study, are the ones for a Ro-Ro ship.

Once the added resistance is calculated it is made non-dimensional through eq. 2.25:

$$R_{AW} = \frac{R_{AW}}{\zeta_a^2 \rho g(b^2/L_{wl})} \qquad (2.25)$$

Fig. 2.6 shows the curve for the added resistance with Alexandersson's method. The curve is commented in the following.

Figure 2.6: Non dimensional added resistance with Alexandersson method.

Comparison of the two methods:

A graphic comparison is made here to see how similar the two methods are with each other. In Fig. 2.7 the two methods are plotted. It can be seen that both yield very similar results, with the "Improved Formula" by Liu et al. have a slightly higher peak, and coinciding with longer waves than the ship. On the other hand, Alexandersson's method, provides no added resistance for short waves, as it was expected from the problem formulation, and it peaks when the waves are approximately the same length as the ship. For the plotting, a speed of 10 m/s has been used.

Mean Added Resistance in Irregular Waves:

The mean added resistance in irregular waves is calculated as shown in eq. 2.26:

$$\bar{R}_{AW} = 2 \int_0^\infty S(\omega) \frac{R_{AW}(\omega)}{\zeta_a^2} d\omega \qquad (2.26)$$

where:

$R_{AW}(\omega)$ the added resistance response function in regular waves
$S(\omega)$ is the wave Spectrum
$\zeta_a$ the regular wave amplitude

For this study the JONSWAP (Joint North Sea Wave Project) wave spectrum has been chosen. The JONSWAP spectrum is valid for not fully developed sea states but it is also used to represent fully developed seas. The spectrum is expressed as:

Figure 2.7: Comparison of non dimensional added resistance with Alexandersson's method and the "Improved formula for estimating the added resistance".

$$S(\omega) = \frac{\alpha g^2}{\omega^5} exp(-1.25(\frac{\omega_p}{\omega}))\gamma^{exp(\frac{-(\omega/\omega_p-1)^2}{s\sigma^2})} \qquad (2.27)$$

where:

$$\sigma = \begin{cases} 0.07 & \text{if } \omega < \omega_p \\ 0.09 & \text{if } \omega \geq \omega_p \end{cases}$$

$$\alpha = 5.061 \frac{H_s^2}{T_p^4}(1 - 0.287\ln(\gamma))$$

The peakedness parameter $\gamma$ is generally 3.3, and it is also the value used here. The JONSWAP is the same as the Pierson Moskowitz, Bretschneider and ITTC wave spectra, given $H_s$, $T_p$, when $\gamma = 1$. In Fig. 2.8 the JONSWAP spectrum is plotted.

Figure 2.8: The JONSWAP wave spectrum.

From the mean added resistance the power is calculated in the same way as the calm water and the wind. Thus, the power is expressed as shown in eq. 2.28:

$$P_{AW} = \bar{R}_{AW} \, V \frac{1}{\eta_{tot}} \qquad (2.28)$$

In Fig. 2.9 the three different components of the power can be seen. The calm water accounts for the highest contribution to the resistance as expected. The wave added power is computed here only for the improved formula by Liu et al., but later both methods are be computed. For the wave added resistance a significant wave height, $H_s$ of 4 m is chosen, and a $T_p$ peak period of 7 s, just to provide an example.

To compute the performance of the ship while sailing the power is computed as the sum of the calm water, the wind and the waves power.

$$P_{TOT} = P_{CW} + P_{AA} + P_{AW} \qquad (2.29)$$

Figure 2.9: Power prediction for the three different computed terms: the calm water power, wind power and wave power.

In the following, further exemplary embodiments of the apparatus 100 and/or the apparatus 200 are described. In particular, suitable machine-learning and training approaches are described in more detail.

An overview of the followed approach in this machine-learning problem is shown in Fig. 3.1. This kind of method showed is used for supervised learning, which is different than other machine-learning methods.

Following, each step is broken down and described.

Figure 3.1: Flowchart of the Machine Learning steps.

In Fig. 3.1 the steps followed in this study are shown in a flowchart. The first step consists in loading the raw data, which may be in the form of .csv (comma separeted values). Once the data is uploaded and interpreted the features and the target for creating the machine-learning models are selected. At this point, the subset of data that is selected is split between training set and test set data, that will serve to train and test the model created. The three selected models are at this point applied on the data and trained. The trained model is subsequently applied on the unseen test data, and the difference between the prediction and the actual data is computed. The aforementioned steps are explained in greater detail in the following sections.

Raw Data & Data Analysis:

Starting from the engine room, the sensors measure the fuel flow and temperature of the auxiliary engine, the electric power and the main engine fuel temperature and flow. In addition, the shaft power and torque, along with the RPM of the shaft and the electric power of the shaft generator are collected. Furthermore the water temperature is measure, and also the rudder angle and the rate of turn of the rudder. At the aft and the bow of the ship sensors measure the draft. The ship is also equipped with an echo sounder sensors to measure the depth of the water. At the wheelhouse, the GPS tracker is positioned that measures the position of the ship, the speed over ground and the course of the ship. Furthermore, a gyroscope collects data regarding the heading of the ship and the roll and pitch motions. In addition a motion sensor also records the six degrees of freedom (DOF) of the ship. Finally, an anemometer records the wind speed and direction.

Data selection:

For predicting the performance with machine-learning models, the selection of the data sets may be relevant in order to obtain good results. The first step is to define what is expected to be predicted. The goal here is to predict the propulsive power when the ship is sailing in open sea, so the parts of voyage of the ship when it's maneuvering, accelerating and decelerating will not be considered. To do this, the data is divided by the voyages by port of arrival and port of departure.

Features and Target selection:

The target is the variable that is going to be predicted with the machine-learning, while for features, is meant the variables that form the data frame excluding the target and contribute to predict the selected target. In the feature selection here, a subset of the features may be chosen to build the model. For the ship performance analysis various types of parameters can be chosen. Some of them are: hull performance, main engine performance, the ship's overall efficiency and fuel efficiency. Even though many variables may be available, the focus is on the performance of the hull. The variables, or features as called in machine-learning, that describe the performance of the hull are: the speed over ground, wind speed and direction, ship course and heading, draft forward and aft, rudder angle, and the motions of the ship. These features were chosen based on the empirical and semi-empirical calculations, and their influence on the propulsion power. The measurements of the waves, even though could be useful for such a study may not be considered if the available data is considered to be too little, and may in some cases be invalid. To this previous list, the power delivered to the propeller is omitted, and this is because the delivered power is the target, what is wanted to be predicted, of this machine-learning problem.

Since the propulsive power is the target, a brief comparison of the two data sets is carried out here. The target of a supervised machine-learning problem may be relevant for both the training and the testing as discussed in a following subsection.

Training Data & Test Data:

Once the data to be used has been prepared, and the features and the target have been selected, the data is split for the training of the model and the testing of the model. Since machine-learning works in a way that it learns properties of a data frame and then applying them to new data it is common to split the data in two sets. These two data sets are called: training set, which is used to learn the properties of the data, and test set, on which the learned properties may be tested.

Here, a random split of the data into training and test sets is computed according to Pedregosa et al. The splitting used is of 80 - 20, i.e. 80% of the data is used for training and 20% for testing. This may be a common split in machine-learning problems, but also not the only possible option.

Training & Testing:

In the training part of the machine-learning, the models are applied on the training data. This way, the models learn the patterns of the data, the linearities and nonlinearities of the features depending on the model. For the training, the fit function of Pedregosa et al. is used to train the model. The theory on which the used models are based, is explained further below.

Once the model is trained, the unseen test data is given to the trained model to predict a target variable, which in this case is the propulsion power. The test data, therefore, that is given as input to the model, is uncoupled from the propulsion power. Once that the model has predicted the propulsive power, it is compared to the actual data of the propulsion to see how good or bad is the model at predicting. To verify the accuracy of the models, the approach of Pedregosa et al. uses a metrics module that has different functions to measure regression performance. For this case the R2 and the mean absolute error are used. Below a brief description of these metric functions is given.

Mean Absolute error:

The mean_absolute_error function from Pedregosa et al. calculates mean absolute error, a metric that corresponds to the expected value of the absolute error loss. Assuming that $\hat{y}_i$ is the predicted value from the model, of the i-th sample, and $y_i$ is the corresponding value taken from the data, then the mean absolute error (MAE) estimated over $n_{samples}$ used in the model is defined as:

$$\mathrm{MAE}(y, \hat{y}) = \frac{1}{n_{samples}} \sum_{i=0}^{n_{samples}-1} |y_i - \hat{y}_i| \qquad (3.1)$$

R2 score, the coefficient of determination:

The r2_score function called, the coefficient of determination provides a measure of how well new samples are likely to be predicted by the model. The best possible score is 1.0, while a negative score will indicate a worse prediction.

For example, a model that always predicts the expected value of y, disregarding the input features, would get a R2 score of 0.0.

Assuming $\hat{y}_i$ is the predicted value of the i-th sample and $y_i$ is the value from the data, then the score R2 estimated over nsamples is defined as:

$$R^2(y, \hat{y}) = 1 - \frac{\sum_{i=0}^{n_{samples}-1} (y_i - \hat{y}_i)^2}{\sum_{i=0}^{n_{samples}-1} (y_i - \bar{y})^2} \qquad (3.2)$$

where:

$$\bar{y} = \frac{1}{n_{samples}} \sum_{i=0}^{n_{samples}-1} y_i. \qquad (3.3)$$

Machine Learning Models:

Exemplarily, three different models may be used: one statistical and two further machine-learning models, making a so called hybrid analysis. For the statistical method linear regression can be used, while the machine-learning models can be the XGBoost, short for extreme gradient boosting, a model of ensemble trees, and multi-layer perceptron regression, part of neural network models. All of the aforementioned are regression models as the desired output is a continuous variable. The reason for using three models is to compare the results of a statistical model to more complex machine-learning models that take into account nonlinearities within data. Both XGBoost, and the multi-layer regression take into account non-linearities with different approaches.

Execution examples

1. An apparatus (100) for predicting a power consumption of a maritime vessel (300), the apparatus comprising:

an input interface (101) configured to receive a speed of the maritime vessel (300) and a physical parameter of a maritime environment of the maritime vessel (300), the speed and the physical parameter influencing the power consumption of the maritime vessel (300);

a processor (102) configured to determine a power consumption estimate based on the speed and the physical parameter using a predetermined power consumption model, to determine a power consumption correction based on the speed and the physical parameter using a power consumption correction model, the power consumption correction model representing a modeling error associated with the predetermined power consumption model, the power consumption correction model depending on a model parameter associated with the physical parameter, and to combine the power consumption estimate with the power consumption correction in order to obtain a predicted power consumption of the maritime vessel (300); and

an output interface (103) configured to provide the predicted power consumption of the maritime vessel (300).

2. The apparatus (100) of execution example 1, wherein the predetermined power consumption model comprises a calm water resistance model of the maritime vessel (300), and an added resistance model of the maritime vessel (300).

3. The apparatus (100) of execution example 2, wherein the calm water resistance model is independent of the physical parameter, and wherein the added resistance model is dependent of the physical parameter.

4. The apparatus (100) of any one of the preceding execution examples, wherein the power consumption correction model is a statistical regression model, wherein the model parameter is a weight associated with the physical parameter; wherein the power consumption correction model is a neural network model, wherein the model parameter is a weight of a neuron associated with the physical parameter; wherein the power consumption correction model is an extreme gradient boosted tree model, wherein the model parameter is a score of a leaf associated with the physical parameter; or wherein the power consumption correction model is a Kalman filter model, wherein the model parameter is a coefficient associated with the physical parameter.

5. The apparatus (100) of any one of the preceding execution examples, wherein the physical parameter is one of the following physical parameters: a rudder angle of the maritime vessel (300), a draft of the maritime vessel (300), a heading of the maritime vessel (300), a wind speed relative to the maritime vessel (300), a wind direction relative to the maritime vessel (300), a current speed relative to the maritime vessel (300), a current direction relative to the maritime vessel (300), a wave height around the maritime vessel (300), a wave period around the maritime vessel (300), a wave steepness around the maritime vessel (300), a wave spectrum around the maritime vessel (300), a water density around the maritime vessel (300), a water salinity around the maritime vessel (300), a water temperature around the maritime vessel (300), a wetted surface of the maritime vessel (300), a geometric parameter of a hull of the maritime vessel (300), a sea ice thickness around the maritime vessel (300), a sea ice concentration around the maritime vessel (300), a fouling intensity of a hull of the maritime vessel (300).

6. An apparatus (200) for determining a model parameter of a power consumption correction model of a maritime vessel (300), the power consumption correction model representing a modeling error associated with a predetermined power consumption model, the apparatus comprising:

a database (202) comprising a plurality of training sets (203), each training set (203) comprising a speed of the maritime vessel (300), a physical parameter of a maritime environment of the maritime vessel (300), and a power consumption of the maritime vessel (300); and

a processor (201) configured to determine, for each training set (203), a power consumption estimate based on the respective speed and the respective physical parameter using the predetermined power consumption model, to determine, for each training set (203), a respective power consumption difference between the respective power consumption estimate and the respective power consumption, to append, for each training set (203), the respective power consumption difference to the respective training set (203) in order to obtain a respective appended training set, and to train the power consumption correction model upon the basis of the plurality of appended training sets in order to obtain the model parameter of the power consumption correction model; and

an output interface (205) configured to provide the model parameter.

7. The apparatus (200) of execution example 6, further comprising:
an input interface (204) configured to receive a training set (203), the training set (203) comprising a speed of the maritime vessel (300), a physical parameter of a maritime environment of the maritime vessel (300), and a power consumption of the maritime vessel (300), and to store the received training set (203) in the database (202).

8. The apparatus (200) of any one of the execution examples 6 or 7, wherein the predetermined power consumption model comprises a calm water resistance model of the maritime vessel (300), and an added resistance model of the maritime vessel (300).

9. The apparatus (200) of execution example 8, wherein the calm water resistance model is independent of the physical parameters within the plurality of training sets, and wherein the added resistance model is dependent of the physical parameters within the plurality of training sets.

10. The apparatus (200) of any one of the execution examples 6 to 9, wherein the power consumption correction model is a statistical regression model, wherein the model parameter is a weight associated with the physical parameter; wherein the power consumption correction model is a neural network model, wherein the model parameter is a weight of a neuron associated with the physical parameter; wherein the power consumption correction model is an extreme gradient boosted tree model, wherein the model parameter is a score of a leaf associated with the physical parameter; or wherein the power consumption correction model is a Kalman filter model, wherein the model parameter is a coefficient associated with the physical parameter.

11. The apparatus (200) of any one of the execution examples 6 to 10, wherein the physical parameter is one of the following physical parameters: a rudder angle of the maritime vessel (300), a draft of the maritime vessel (300), a heading of the maritime vessel (300), a wind speed relative to the maritime vessel (300), a wind direction relative to the maritime vessel (300), a current speed relative to the maritime vessel (300), a current direction relative to the maritime vessel (300), a wave height around the maritime vessel (300), a wave period around the maritime vessel (300), a wave steepness around the maritime vessel (300), a wave spectrum around the maritime vessel (300), a water density around the maritime vessel (300), a water salinity around the maritime vessel (300), a water temperature around the maritime vessel (300), a wetted surface of the maritime vessel (300), a geometric parameter of a hull of the maritime vessel (300), a sea ice thickness around the maritime vessel (300), a sea ice concentration around the maritime vessel (300), a fouling intensity of a hull of the maritime vessel (300).

12. Use of an apparatus (100) of any one of the execution examples 1 to 6 or an apparatus (200) of any one of the execution examples 7 to 11 within a sail plan system for planning a sailing route of a maritime vessel (300).

13. A method for operating an apparatus (100) for predicting a power consumption of a maritime vessel (300), the apparatus comprising an input interface (101), a processor (102) and an output interface (103), the method comprising:

receiving, by the input interface (101), a speed of the maritime vessel (300) and a physical parameter of a maritime environment of the maritime vessel (300), the speed and the physical parameter influencing the power consumption of the maritime vessel (300);

determining, by the processor (102), a power consumption estimate based on the speed and the physical parameter using a predetermined power consumption model;

determining, by the processor (102), a power consumption correction based on the speed and the physical parameter using a power consumption correction model, the power consumption correction model representing a modeling error associated with the predetermined power consumption model, the power consumption correction model depending on a model parameter associated with the physical parameter;

combining, by the processor (102), the power consumption estimate with the power consumption correction in order to obtain a predicted power consumption of the maritime vessel (300); and

providing, by the output interface (103), the predicted power consumption of the maritime vessel (300).

14. A method for operating an apparatus (200) for determining a model parameter of a power consumption correction model of a maritime vessel (300), the power consumption correction model representing a modeling error associated with a predetermined power consumption model, the apparatus comprising database (202), a processor (201) and an output interface (205), wherein the database (202) comprises a plurality of training sets (203), each training set (203) comprising a speed of the maritime vessel (300), a physical parameter of a maritime environment of the maritime vessel (300), and a power consumption of the maritime vessel (300), the method comprising:

determining, by the processor (201), for each training set (203), a power consumption estimate based on the respective speed and the respective physical parameter using the predetermined power consumption model;

determining, by the processor (201), for each training set (203), a respective power consumption difference between the respective power consumption estimate and the respective power consumption;

appending, by the processor (201), for each training set (203), the respective power consumption difference to the respective training set (203) in order to obtain a respective appended training set;

training, by the processor (201), the power consumption correction model upon the basis of the plurality of appended training sets in order to obtain the model parameter of the power consumption correction model; and

providing, by the output interface (205), the model parameter.

15. Computer program comprising a program code for performing the method of execution example 13 or the method of execution example 14.

REFERENCE SIGNS

| | |
|---|---|
| 100, 200 | apparatus |
| 101, 103, 204, 205 | interface |
| 102, 201 | processor |
| 104 | memory |
| 202 | database |
| 203 | training set |
| 300 | maritime vessel |
| 301 | ocean |
| 302 | sensor |
| 400, 500 | flowchart |
| 401-406 | step |
| 501-504 | step |

**Claims**

1. An apparatus (100) for predicting a power consumption of a maritime vessel (300), the apparatus comprising:

an input interface (101) configured to receive a speed of the maritime vessel (300) and a physical parameter of a maritime environment of the maritime vessel (300), the speed and the physical parameter influencing the power consumption of the maritime vessel (300);
a processor (102) configured to determine a power consumption estimate based on the speed and the physical parameter using a predetermined power consumption model, to determine a power consumption correction based on the speed and the physical parameter using a power consumption correction model, the power consumption correction model representing a modeling error associated with the predetermined power consumption model, the power consumption correction model depending on a model parameter associated with the physical parameter, and to combine the power consumption estimate with the power consumption correction in order to obtain a predicted power consumption of the maritime vessel (300); and
an output interface (103) configured to provide the predicted power consumption of the maritime vessel (300), wherein the power consumption correction model is a statistical regression model,
wherein the physical parameter is at least one of the following physical parameters: a rudder angle of the maritime vessel (300), a draft of the maritime vessel (300), a fouling intensity of a hull of the maritime vessel (300).

2. The apparatus (100) of claim 1, wherein the predetermined power consumption model comprises a calm water resistance model of the maritime vessel (300), and an added resistance model of the maritime vessel (300).

3. The apparatus (100) of claim 2, wherein the calm water resistance model is independent of the physical parameter, and wherein the added resistance model is dependent of the physical parameter.

4. The apparatus (100) of any one of the preceding claims, wherein the model parameter is a weight associated with the physical parameter; wherein the power consumption correction model is a neural network model, wherein the model parameter is a weight of a neuron associated with the physical parameter; wherein the power consumption correction model is an extreme gradient boosted tree model, wherein the model parameter is a score of a leaf associated with the physical parameter; or wherein the power consumption correction model is a Kalman filter model, wherein the model parameter is a coefficient associated with the physical parameter.

5. The apparatus (100) of any one of the preceding claims, wherein the physical parameter is a combination of the following physical parameters: the rudder angle of the maritime vessel (300), the draft of the maritime vessel (300), the fouling intensity of a hull of the maritime vessel (300).

6. An apparatus (200) for determining a model parameter of a power consumption correction model of a maritime vessel (300), the power consumption correction model representing a modeling error associated with a predetermined power consumption model, the apparatus comprising:

a database (202) comprising a plurality of training sets (203), each training set (203) comprising a speed of the maritime vessel (300), a physical parameter of a maritime environment of the maritime vessel (300), and a power consumption of the maritime vessel (300); and

a processor (201) configured to determine, for each training set (203), a power consumption estimate based on the respective speed and the respective physical parameter using the predetermined power consumption model, to determine, for each training set (203), a respective power consumption difference between the respective power consumption estimate and the respective power consumption, to append, for each training set (203), the respective power consumption difference to the respective training set (203) in order to obtain a respective appended training set, and to train the power consumption correction model upon the basis of the plurality of appended training sets in order to obtain the model parameter of the power consumption correction model; and

an output interface (205) configured to provide the model parameter,

wherein the power consumption correction model is a statistical regression model,

wherein the physical parameter is at least one of the following physical parameters: a rudder angle of the maritime vessel (300), a draft of the maritime vessel (300), a fouling intensity of a hull of the maritime vessel (300).

7. The apparatus (200) of claim 6, further comprising:
an input interface (204) configured to receive a training set (203), the training set (203) comprising a speed of the maritime vessel (300), a physical parameter of a maritime environment of the maritime vessel (300), and a power consumption of the maritime vessel (300), and to store the received training set (203) in the database (202).

8. The apparatus (200) of any one of the claims 6 or 7, wherein the predetermined power consumption model comprises a calm water resistance model of the maritime vessel (300), and an added resistance model of the maritime vessel (300).

9. The apparatus (200) of claim 8, wherein the calm water resistance model is independent of the physical parameters within the plurality of training sets, and wherein the added resistance model is dependent of the physical parameters within the plurality of training sets.

10. The apparatus (200) of any one of the claims 6 to 9, wherein the model parameter is a weight associated with the physical parameter; wherein the power consumption correction model is a neural network model, wherein the model parameter is a weight of a neuron associated with the physical parameter; wherein the power consumption correction model is an extreme gradient boosted tree model, wherein the model parameter is a score of a leaf associated with the physical parameter; or wherein the power consumption correction model is a Kalman filter model, wherein the model parameter is a coefficient associated with the physical parameter.

11. The apparatus (200) of any one of the claims 6 to 10, wherein the physical parameter is a combination of the following physical parameters: the rudder angle of the maritime vessel (300), the draft of the maritime vessel (300), the fouling intensity of a hull of the maritime vessel (300).

12. Use of an apparatus (100) of any one of the claims 1 to 6 or an apparatus (200) of any one of the claims 7 to 11 within a sail plan system for planning a sailing route of a maritime vessel (300).

13. A method for operating an apparatus (100) for predicting a power consumption of a maritime vessel (300), the apparatus comprising an input interface (101), a processor (102) and an output interface (103), the method comprising:

receiving, by the input interface (101), a speed of the maritime vessel (300) and a physical parameter of a maritime environment of the maritime vessel (300), the speed and the physical parameter influencing the power consumption of the maritime vessel (300);

determining, by the processor (102), a power consumption estimate based on the speed and the physical parameter using a predetermined power consumption model;

determining, by the processor (102), a power consumption correction based on the speed and the physical parameter using a power consumption correction model, the power consumption correction model representing a modeling error associated with the predetermined power consumption model, the power consumption correction model depending on a model parameter associated with the physical parameter;

combining, by the processor (102), the power consumption estimate with the power consumption correction in order to obtain a predicted power consumption of the maritime vessel (300); and

providing, by the output interface (103), the predicted power consumption of the maritime vessel (300),

wherein the power consumption correction model is a statistical regression model,

wherein the physical parameter is at least one of the following physical parameters: a rudder angle of the maritime vessel (300), a draft of the maritime vessel (300), a fouling intensity of a hull of the maritime vessel (300).

14. A method for operating an apparatus (200) for determining a model parameter of a power consumption correction model of a maritime vessel (300), the power consumption correction model representing a modeling error associated with a predetermined power consumption model, the apparatus comprising database (202), a processor (201) and an output interface (205), wherein the database (202) comprises a plurality of training sets (203), each training set (203) comprising a speed of the maritime vessel (300), a physical parameter of a maritime environment of the maritime vessel (300), and a power consumption of the maritime vessel (300), the method comprising:

determining, by the processor (201), for each training set (203), a power consumption estimate based on the respective speed and the respective physical parameter using the predetermined power consumption model;

determining, by the processor (201), for each training set (203), a respective power consumption difference between the respective power consumption estimate and the respective power consumption;

appending, by the processor (201), for each training set (203), the respective power consumption difference to the respective training set (203) in order to obtain a respective appended training set;

training, by the processor (201), the power consumption correction model upon the basis of the plurality of appended training sets in order to obtain the model parameter of the power consumption correction model; and

providing, by the output interface (205), the model parameter,

wherein the power consumption correction model is a statistical regression model,

wherein the physical parameter is at least one of the following physical parameters: a rudder angle of the maritime vessel (300), a draft of the maritime vessel (300), a fouling intensity of a hull of the maritime vessel (300).

15. Computer program comprising a program code for performing the method of claim 13 or the method of claim 14.

Fig. 1

Fig. 2

302

100, 200

300

302

301

Fig. 3

400

401

402

403

404

405

406

Fig. 4

Fig. 5

Europäisches
Patentamt

European
Patent Office

Office européen
des brevets

**PARTIAL EUROPEAN SEARCH REPORT**

under Rule 62a and/or 63 of the European Patent Convention.
This report shall be considered, for the purposes of
subsequent proceedings, as the European search report

Application Number

EP 20 19 4982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/251064 A1 (ISHIOKA MASAHITO [JP] ET AL) 1 September 2016 (2016-09-01) * paragraphs [0030], [0031], [0032], [0033], [0035], [0036], [0056] - [0060], [0062], [0063], [0071], [0072]; figure 2 * ----- | 1-5,12, 13,15 | INV. G01C21/20 B63B49/00 G01W1/10 G01W1/00 |
| A | US 2015/149074 A1 (LEPISTÖ MIKKO [FI] ET AL) 28 May 2015 (2015-05-28) * paragraphs [0005], [0022] - [0024], [0029] - [0030], [0033] - [0034], [0041], [0047], [0063] - [0068] * ----- | 1-5,12, 13,15 | |
| A | "Regression analysis", Wikipedia , 28 November 2016 (2016-11-28), XP002782142, Retrieved from the Internet: URL:https://en.wikipedia.org/w/index.php?title=Regression_analysis&oldid=751970896 [retrieved on 2018-06-18] * the whole document * ----- -/-- | 1-5,12, 13,15 | TECHNICAL FIELDS SEARCHED (IPC) G01C B63B |

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 13 April 2021 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

page 1 of 2

Europäisches
Patentamt

European
Patent Office

Office européen
des brevets

# PARTIAL EUROPEAN SEARCH REPORT

Application Number

EP 20 19 4982

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | MAO WENGANG ET AL: "Statistical models for the speed prediction of a container ship", OCEAN ENGINEERING, PERGAMON, AMSTERDAM, NL, vol. 126, 13 September 2016 (2016-09-13), pages 152-162, XP029775914, ISSN: 0029-8018, DOI: 10.1016/J.OCEANENG.2016.08.033 * the whole document * ----- | 1-5,12, 13,15 | |

TECHNICAL FIELDS
SEARCHED    (IPC)

EPO FORM 1503 03.82 (P04C10)

Europäisches
Patentamt

European
Patent Office

Office européen
des brevets

**INCOMPLETE SEARCH
SHEET C**

Application Number

EP 20 19 4982

Claim(s) completely searchable:
1-5, 13

Claim(s) searched incompletely:
12, 15

Claim(s) not searched:
6-11, 14

Reason for the limitation of the search:

The search has been carried out on the basis of claims 1-5 and 12
(partially), 13, 15 (partially) as indicated by the applicant in the
communication dated 19-01-2021, following the invitation pursuant Rule
62a(1) EPC.

## ANNEX TO THE EUROPEAN SEARCH REPORT
## ON EUROPEAN PATENT APPLICATION NO.

EP 20 19 4982

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2021

| Patent document cited in search report | | Publication date | Patent family member(s) | | Publication date |
|---|---|---|---|---|---|
| US 2016251064 | A1 | 01-09-2016 | CN 105722756 | A | 29-06-2016 |
| | | | JP 6038094 | B2 | 07-12-2016 |
| | | | JP 2016078685 | A | 16-05-2016 |
| | | | KR 20160057381 | A | 23-05-2016 |
| | | | US 2016251064 | A1 | 01-09-2016 |
| | | | WO 2016059809 | A1 | 21-04-2016 |
| US 2015149074 | A1 | 28-05-2015 | CN 104508427 | A | 08-04-2015 |
| | | | EP 2669630 | A1 | 04-12-2013 |
| | | | JP 2015523557 | A | 13-08-2015 |
| | | | KR 20150018610 | A | 23-02-2015 |
| | | | US 2015149074 | A1 | 28-05-2015 |
| | | | WO 2013178779 | A1 | 05-12-2013 |

EPO FORM P0459

For more details about this annex : see Official Journal of the European Patent Office, No. 12/82